# EUROPEAN PATENT APPLICATION

(11) **EP 0 632 254 A1**
(43) Date of publication of application: **04.01.1995**
(21) Application number: 94201690.8
(22) Date of filing: 13.06.1994
(51) Int. Cl.: G01D 13/22, G01D 11/28, G01D 13/28

(54) **Instrument with a luminous pointer**

(30) Priority: 30.06.1993 GB 9313443
(71) Applicant: DELCO ELECTRONICS OVERSEAS CORPORATION, Detroit, Michigan 48202 (US)
(72) Inventor: Taylor, Peter, Maghull, Liverpool L31 6EF (GB); Dickson, David, Maghull, Liverpool L31 7DL (GB)
(74) Representative: Denton, Michael John

(57) **Abstract**

An instrument (40) comprises a pointer (10) including a pointer blade (12), a pointer cap (18) supporting the pointer blade (12) and a hub (20) integral with the cap (18) for securing the pointer (10) to an instrument, the pointer blade (12) being formed from a coloured transparent or translucent material containing fluorescent particles or pigment, for example a material known as "LISA" produced by Bayer. The instrument (40) also includes a light source (42) capable of emitting white or near white light which illuminates the pointer (10). The use of a coloured pointer blade (12) avoids light bleeding behind the cap (18) from being visible and the use of fluorescent particles or pigment ensures that the pointer is adequately illuminated and provides balanced illumination along the length of the pointer.

## Description

The present invention relates to an instrument including a fluorescent pointer.

Known prior art pointers intended to be illuminated, for example for use in automotive applications, are generally moulded from either clear polycarbonate or acrylic material. These materials allow light to be transmitted through the length of the pointer via a pick-up prism located in the cap area of the pointer. If it is desired to give the pointer a colour, a layer of suitably coloured material is applied to the front or rear surface of the pointer blade by pad printing or hot foiling. When the pointer is given an amber, orange or red colour, a white coat of foil or paint is applied behind the colour coat.

Prior art pointers of this type generally give adequate illumination with virtually any desired colour. However, the brightness of the pointer is limited and it is also difficult to produce a balanced light level along the entire length of the pointer blade. Furthermore, since the light reflected within the cap prism is substantially white due to the clear material used, light which seeps between the pointer cap and the surface of the instrument dial is visible, as a ring of white light around the pointer cap.

The present invention seeks to provide an improved instrument.

According to an aspect of the present invention, there is provided an instrument as specified in claim 1.

It has previously been considered that pointer blades always had to be made of clear transparent materials in order to obtain sufficient illumination of the pointer and that the only way to provide a coloured pointer was by providing a coating on a surface of the pointer. However, the incorporation of fluorescent particles into the material of the pointer blade has enabled the use of pre-coloured translucent materials. It has been found that the fluorescent particles can compensate sufficiently for the loss of brightness caused by the coloured pigmentation of the pointer material and can provide a more balanced light level along substantially the entire length of the pointer blade.

Additionally, it has been found that any light bleeding behind the pointer cap is much less visible than with prior art pointers, and with some colours of pointer blade this stray light is not visible.

The use of a light source which emits light in the range of visible frequencies reduces the cost of the instrument and also its reliability.

Preferably, the fluorescent particles have or the fluorescent pigment has edge fluorescence.

In an embodiment, the pointer blade is provided on one or more surfaces thereof with a coating of coloured material. The coating may be or may include a layer of a white or other light colour. Such a coating can make the pointer blade appear semi-transparent and can improve the illumination of the pointer.

Preferably, the pointer blade is formed from a red, amber or orange transparent or translucent material.

In the preferred embodiment, the light source is operative to produce white or near white light.

An embodiment of the present invention is described below, by way of illustration only, with reference to the accompanying drawing, in which:
Figure 1 is a perspective view of an embodiment of pointer;
Figure 2 is a cross-sectional view of the pointer of Figure 1 taken along line 2-2 of Figure 1; and
Figure 3 is a cross-sectional view of part of an instrument including the pointer of Figure 2.

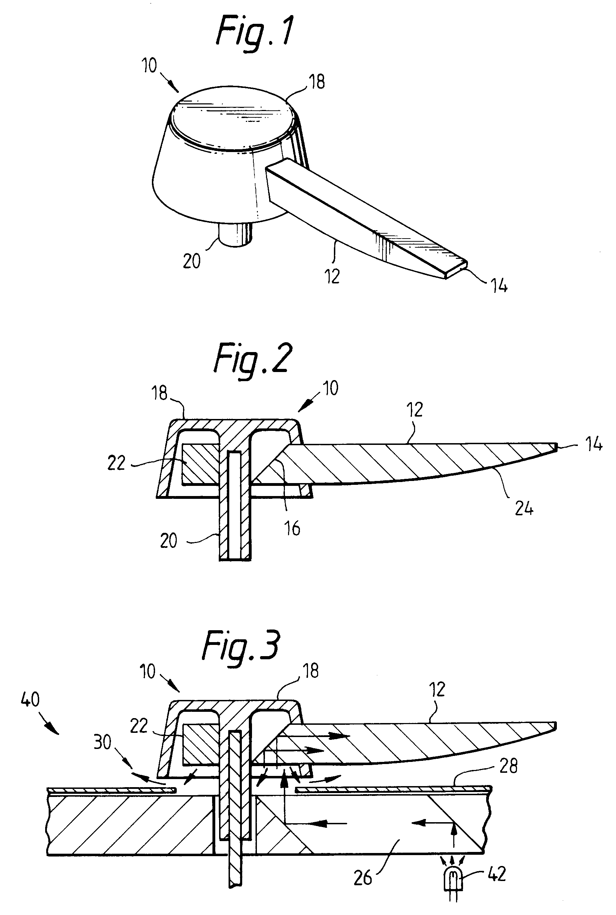

Referring to Figures 1 and 2, the embodiment of pointer 10 shown includes an elongate and substantially straight pointer blade 12, the rear surface of which tapers towards the free end 14 of the pointer blade 12. The opposite end of the pointer blade 12 includes a reflection prism 16 in the form of a surface of the pointer blade disposed at a critical angle relative to the direction of travel of light fed to the pointer, in this embodiment substantially perpendicular to the plane of the pointer blade.

The reflection prism 16 is located within an opaque hollow cap 18 of frusto-conical form and which tapers towards a front surface of the pointer 10. The cap 18 includes integrally formed therewith a hub 20, depending from the centre of the top of the cap 18. The hub 20 has a narrow bore formed therein for receiving a spindle of an instrument gauge or other device.

A balancing weight 22 is located in the cap 18 at a position opposite the pointer blade 12 relative to the hub 20 so as to balance the moment about the hub 20 produced by the pointer blade 12.

The pointer blade 12 is formed from a pre-coloured translucent material, such as polycarbonate or other suitable material, which has embedded therewithin a fluorescent pigment or particles. Preferred colours for the pointer blade material are amber, orange and red.

The fluorescent pigment or particles cause the pointer blade 12 to glow when light is fed through the pointer. In the preferred embodiment, the fluorescent pigment or particles used only provide edge fluorescence, that is they provide fluorescence only when illuminated from one side. The term pigment as used herein is intended to include dies and other similar substances.

A fluorescent pigment which may be used for the pointer blade is a material sold under the trade name "LISA" by Bayer, for example from its offices at Bayer UK Limited, Bayer House, Newbury, Berkshire RG13 1JA.

With certain colours of pointer blade 12, for example amber, the rear surface 24 of the pointer blade 12 may be provided with a white or other light coloured coating by foil or pad printing, or other suitable method. Such a coating can make the pointer blade 12 appear semi-transparent and can improve the illumination of the pointer blade 12.

Referring to Figure 3, the pointer of Figures 1 and 2 is shown fitted to an instrument 40. The instrument includes a light guide 26 formed of clear material through which light from a light source 42 is fed to the reflection prism 16 of the pointer blade 12 at an angle substantially orthogonal to the pointer blade 12. The instrument 40 also includes a dial cover film 28, which typically includes a series of dial graphics (not shown) illuminated by the light source 42 and/or by other similar light sources.

The light source 42 is of the type commonly used to illuminate an instrument display from within the instrument itself. Preferably, the light source 42 produces a white or near white light, although other frequencies or groups of frequencies in the visible light range may be used. It is to be noted that the light source 42 in the embodiment of Figure 3 is not an ultraviolet light source.

Typically, light fed to the reflection prism 16 is not completely reflected into the pointer blade 12. Some this light strays into the cap 22 and bleeds through the space 30 between the cap 18 and the dial cover film 28. However, since this stray light has been filtered through the coloured material of the pointer blade 12, the light which bleeds through the space 30 is significantly less visible than straying from a clear pointer blade.

The disclosures in British patent application no. 9313443.5, from which this application claims priority, and in the abstract accompanying this application are incorporated herein by reference.

## Claims

1. An instrument comprising a light source (42) operative to emit light in the visible range and a pointer (10) including a pointer blade (12), a pointer cap (18) supporting the pointer blade and securing means (20) securing the pointer to the instrument, the pointer blade being formed from a coloured transparent or translucent material containing fluorescent particles or pigment and be capable of being illuminated by the light source.

2. An instrument according to claim 1, wherein the fluorescent material of the pointer blade has edge fluorescence.

3. An instrument according to claim 1 or 2, wherein the pointer blade (12) is provided on one or more surfaces thereof with a coating (24) of coloured material.

4. An instrument according to claim 3, wherein the coating (24) is or includes a layer of a white or other light colour.

5. An instrument according to any preceding claim, wherein the pointer blade (12) is formed from a red, amber or orange transparent or translucent material.

6. An instrument according to any preceding claim, wherein the light source (42) is operative to emit white or near white light.
